(19) **Europäisches Patentamt**

**European Patent Office**

**Office européen des brevets**

(11) **EP 1 151 966 B1**

(12) **EUROPÄISCHE PATENTSCHRIFT**

(45) Veröffentlichungstag und Bekanntmachung des Hinweises auf die Patenterteilung:
**30.06.2004 Patentblatt 2004/27**

(51) Int Cl.7: **C01F 11/18**

(21) Anmeldenummer: **00108224.7**

(22) Anmeldetag: **14.04.2000**

(54) **Stabiles, plättchenförmiges, calcitisches Calciumcarbonat, Verfahren zu dessen Herstellung und seine Verwendung**

Stable plate-like calcitic calcium carbonate, process for its preparation and the use thereof

Carbonate de calcium calcitique stable sous forme des plaquettes, procédé pour sa préparation et son utilisation

(84) Benannte Vertragsstaaten:
**AT BE CH CY DE DK ES FI FR GB GR IE IT LI LU MC NL PT SE**

(43) Veröffentlichungstag der Anmeldung:
**07.11.2001 Patentblatt 2001/45**

(73) Patentinhaber: **SCHAEFER KALK**
**D-65582 Diez (DE)**

(72) Erfinder: **Vucak, Dr. Marijan**
**65624 Altendiez (DE)**

(74) Vertreter: **Rupprecht, Klaus, Dipl.-Ing.**
**Luderschmidt, Schüler & Partner GbR**
**J.-F.-Kennedy-Strasse 4**
**65189 Wiesbaden (DE)**

(56) Entgegenhaltungen:
**EP-A- 0 323 697          GB-A- 2 312 670**

- **DATABASE WPI Section Ch, Week 199035 Derwent Publications Ltd., London, GB; Class E33, AN 1990-264367 XP002148508 & JP 02 184519 A (KYODO KUMIAI TSUKUM), 19. Juli 1990 (1990-07-19)**
- **PATENT ABSTRACTS OF JAPAN vol. 016, no. 334 (C-0964), 21. Juli 1992 (1992-07-21) & JP 04 097910 A (KIYOUDOUKUMIAI TSUKUMI FUAIN SERAMITSUKUSU), 30. März 1992 (1992-03-30)**
- **DATABASE WPI Section Ch, Week 199205 Derwent Publications Ltd., London, GB; Class E33, AN 1992-038533 XP002148509 & JP 03 285816 A (TSUKUMI FINE CERAMI), 17. Dezember 1991 (1991-12-17)**
- **SUGIHARA H ET AL: "SYNTHESIS OF DISK-LIKE CALCIUM CARBONATE (PART I). EFFECT OF VARIOUS ORGANIC COMPOUNDS ON THE CARBONATION OF THE BASIC CALCIUM CARBONATE" JOURNAL OF THE CERAMIC SOCIETY OF JAPAN, INTERNATIONAL EDITION,JP,FUJI TECHNOLOGY PRESS, TOKYO, Bd. 104, Nr. 9, 1. September 1996 (1996-09-01), Seiten 826-831, XP000724525 ISSN: 0912-9200**
- **PATENT ABSTRACTS OF JAPAN vol. 018, no. 435 (M-1655), 15. August 1994 (1994-08-15) & JP 06 129717 A (MITSUBISHI ELECTRIC CORP), 13. Mai 1994 (1994-05-13)**

**Beschreibung**

Die Erfindung bezieht sich auf ein Verfahren zum Herstellen von stabilem, plättchenförmigem, calcitischem Calciumcarbonat mit einem granulometrischen Faktor von etwa 0,5 bis 1 und einem mittleren Partikeldurchmesser von etwa 0,5 bis 1,5 μm, auf danach hergestelltes Calciumcarbonat sowie auf dessen Verwendung.

Calciumcarbonat wird industriell durch Mahlung von natürlichem Kalkstein oder vorwiegend durch Umsetzung einer wässrigen Calciumhydroxid-Suspension mit einem Kohlendioxid enthaltenden Gas hergestellt. Die Morphologie des natürlichen Calciumcarbonats ist unregelmäßig, und die Partikelgrößenverteilung liegt im Bereich von unter einem bis hundertfünfzig Mikrometer. Gefälltes Calciumcarbonat wird, abhängig von den Herstellungsbedingungen, wie z.B. Konzentration der Calciumhydroxid-Suspension, Temperatur, Art und Weise der Reaktion, Anwesenheit von Additiven etc., mit unterschiedlichem Habitus (Rhomboeder, Skalenoeder, Prismen, Säulen und Kugeln) und Partikelgröße (von 0,02 bis mehrere Mikrometer) angeboten.

Calciumcarbonat findet Anwendung bei der Herstellung von Papier, Dispersionsfarben, Kosmetika etc. Es wird als Füllstoff oder Pigment eingesetzt. Der Verbrauch an solchen Füllstoffen und Streichpigmenten wächst ständig in Europa. In den letzten Jahren hat der Einsatz von gefälltem Calciumcarbonat als kostengünstigeres Streichpigment im Vergleich zu Kaolin oder calciniertem Kaolin in vielen Fällen neue Möglichkeiten zur Erzielung hoher Strichqualitäten erbracht. Darüber hinaus haben die ultrafeinen und calcinierten Kaoline, deren Mehrheit der Partikel unter 1 μm liegt, eine weite Verbreitung als Füllstoffe für Farben und Lacke gefunden. Wegen der extrem feinen Partikel und ihrer plättchenförmigen Struktur erhöhen solche Substanzen die Deckfähigkeit und ermöglichen hohe Glanzgrade der Farben.

Für derartige Einsatzzwecke ist es daher bei der Herstellung von Calciumcarbonat besonders von Interesse, die plättchenförmige Struktur und Partikelfeinheit der obengenannten Kaoline zu erreichen.

Nach der Lehre der EP-Patentschrift 429 707 wird basisches Calciumcarbonat dadurch hergestellt, daß man eine wässrige Calciumhydroxid-Suspension durch Zugabe von $CO_2$ carbonatisiert, hierbei definierte Temperaturen der Suspension im Bereich von 2 bis 50°C einhält, und dann die Carbonatisierung bei einem Calcium-Carbonat-Molverhältnis von 3:2 oder 6:5 beendet. Dieses bekannte Verfahren kann unter zusätzlicher Verwendung eines Impfmaterials und von Phosphorsäure-Verbindungen angewendet werden, um plättchenförmigen Calcit zu gewinnen. Das nach diesem Verfahren hergestellte, plättchenförmige Calciumcarbonat weist keine hinreichend plättchenförmige Kristallform auf, wie man den jeweiligen elektronenmikroskopischen Aufnahmen und anderen Angaben in der Patentschrift entnehmen kann.

Aus JP-Patentschrift 2 184 519 ist ein Verfahren bekannt, bei dem in eine Calciumhydroxid-Suspension mit bestimmter Konzentration Kohlendioxid mit festgesetzter Durchflußgeschwindigkeit eingeleitet wird, wobei nach zehnminütiger Reaktion unter fortgesetzter Zugabe von Kohlendioxid eine organische Phosphonatsäure-Verbindung zugegeben wird. Kohlendioxid wird bis zur vollständigen Carbonatisation zugeführt. Nach Filtrierung und Trocknung des Produkts erhält man grobe, plättchenförmige Calciumcarbonat-Partikel mit einem Durchmesser von 1-12 μm und einer Dicke von 0,1-0,2 μm. Neben dieser vergleichsweise großen Korngröße erhält man jedoch kein Produkt, das den vorstehend geschilderten Feinheitsansprüchen genügt.

Die Ausführungen in diesen Dokumenten vermitteln nicht das Wissen für die Herstellung von stabilem, plättchenförmigem, feinteiligem, calcitischem Calciumcarbonat, insbesondere mit einem granulometrischen Faktor kleiner 1 und einem mittleren Partikeldurchmesser kleiner 1,5 μm. Nach dem jetzigen Stand der Technik, ist noch kein Verfahren für die Herstellung von feinem, calcitischem Calciumcarbonat mit plättchenförmiger Struktur und einem mittleren Partikeldurchmesser kleiner 1 μm in großtechnischem Maßstab etabliert.

Die Aufgabe der Erfindung besteht somit darin, feinteiliges, plättchenförmiges, gefälltes Calciumcarbonat mit calcitischer Struktur der eingangs genannten Art anzubieten. Eine weitere Aufgabe der vorliegenden Erfindung ist es, Produktionsmethoden vorzustellen, um dieses Calciumcarbonat herzustellen.

Diese Aufgabe ist bezüglich des erfindungsgemäßen Verfahrens dadurch gelöst, daß Calciumhydroxid in wässriger Suspension unter Einleiten von $CO_2$ und einem Energieeintrag von etwa 25 bis 200 kW/m3 der Suspension zu basischem Calciumcarbonat umgesetzt wird, daß in der Suspension als oberflächenaktive Stoffe ein oder mehrere Additive der Gruppe bestehend aus organisch substituierten Phosphonaten, Polycarboxylaten oder doppel-hydrophilen Blockcopolymeren, mit etwa 0,5 bis 5 Gew.-% bezogen auf das Calciumcarbonat unter Rühren verteilt werden, daß zusätzlich nach der Zugabe der oberflächenaktiven Stoffen weiteres $CO_2$ in die Suspension eingeleitet wird und daß das so gebildete calcitische Calciumcarbonat abfiltriert wird.

Bei dem erfindungsgemäßen Verfahren wird somit zunächst eine Carbonatisierung einer wässrigen Calciumhydroxid-Suspension mit Kohlendioxid vorgenommen. In dieser ersten Phase wird basisches Calciumcarbonat gefällt. In einer zweiten Phase wird anschließend oder zu einem späteren Zeitpunkt die erhaltene Suspension langsam recarbonatisiert, d.h. stabilisiertes, basisches Calciumcarbonat wird in Anwesenheit von verschiedenen oberflächenaktiven Additiven zu stabilem, feinteiligem Calcit umgesetzt. Wie unten näher erläutert wird, ist es alternativ auch möglich, ein vergleichbares Produkt durch Trocknen des stabilisierten, basischen Calciumcarbonats unter kontrollierten Bedingungen zu erhalten.

Hinsichtlich der angestrebten Qualität, also plättchenförmige Ausbildung, bestimmter granulometrischer Faktor und bestimmter mittlerer Partikeldurchmesser, werden besonders günstige Werte erreicht, wenn man nach einem anderen Merkmal der Erfindung die Umsetzung des Calciumhydroxids zu basischem Calciumcarbonat bei einer Temperatur von $\leq 15°C$ durchführt. Gleiches gilt, wenn die Umsetzung des Calciumhydroxids zu basischem Calciumcarbonat bei einer Temperatur von etwa 15 - 20°C unter Zusatz von Calcium-Komplexbildung, nämlich Polyphosphaten, Phosphonaten, Hydroxycarbonsäuren, Saccharose oder Glutamate, mit etwa 0,01 bis 1 Gew.-% bezogen auf den CaO-Gehalt der Calciumhydroxid-Suspension durchgeführt wird.

Eine besonders bevorzugte Ausführungsform des erfindungsgemäßen Verfahrens besteht darin, daß die angesprochene vergleichsweise langsame Zugabe von weiterem $CO_2$ in der Form bewerkstelligt wird, daß der pH-Wert der Suspension am Anfang der Begasung mit dem weiteren $CO_2$ mit einem Wert von $\leq 0,04$ pH-Einheiten/min abgesenkt wird.

Mit einem dem vorstehend beschriebenen ähnlichen Verfahren erhält man ebenfalls calcitisches Calciumcarbonat, wenn auf das vergleichsweise langsame Einleiten von $CO_2$ in die Suspension verzichtet und anstelle dieser Verfahrensschritte das gebildete basische Calciumcarbonat gleich abfiltriert und getrocknet wird. Auch dieses Produkt zeichnet sich durch seinen plättchenförmigen Habitus und den angestrebten granulometrischen Faktor sowie seinen mittleren Partikeldurchmesser aus. Die Trocknung des abfiltrierten Calciumcarbonats erfolgt gemäß der Erfindung vorzugsweise bei etwa 150°C in $H_2O$-gesättigter $CO_2$-Atmosphäre.

Generell kann zum Verfahren der vorliegenden Erfindung ausgeführt werden, daß die präzipitierten Calciumcarbonat-Partikel mit Korngrößen und Eigenschaften, die sich von bisher bekannten Produkten unterscheiden, durch Zugabe von $CO_2$ in eine wässrige Suspension aus basischem Calciumcarbonat (BCC) als Vorstufen-Produkt unter definierten Bedingungen hergestellt werden.

Wie oben genannt, kann das basische Calciumcarbonat mittels verschiedener, bekannter Verfahren hergestellt werden. Bevorzugt wird BCC, das einen Durchmesser bis ca. 3 µm und eine Komdicke bis ca. 0,5 µm aufweist, durch partielle Carbonatisation der Calciumhydroxid-Suspension im Temperaturbereich von 0 bis 20°C, vorzugsweise 10 bis 15°C, hergestellt. $CO_2$ wird vorzugsweise in eine wässrige Calciumhydroxid-Suspension mit Durchflußgeschwindigkeit von 0,06 bis 0,40 dm³$CO_2$/h/g CaO kontrolliert dosiert, bis 60 - 70% des Calciumhydroxids der Kalkmilch mit dem $CO_2$ reagiert haben. Es werden, abhängig von den Fällungs-bedingungen ($CO_2$-Menge, Temperatur) der Kalkmilch, verschiedene Ca-Complexbildner und andere chemische Verbindungen (z.B. Natriumpolyphosphat) in einer Konzentration von 0,01 bis 1 Gew.-% bezogen auf den CaO-Gehalt, zugegeben. Die Konzentration der Calciumhydroxid-Suspension bewegt sich hierbei im Bereich von umgerechnet 30 bis 150g CaO/dm³, vorzugsweise 40 bis 70 g CaO/dm³. Die Carbonatisation wird mit reinem $CO_2$-Gas oder einem Gasgemisch, das unter $CO_2$ keine anderen mit Calciumhydroxid reagierenden Gase enthält (z.B. Luft oder Stickstoff), durchgeführt. Die Gasgemische enthalten dabei mehr als 10 %, vorzugsweise mehr als 20% $CO_2$. Die Reaktionswärme wird am Anfang des Prozesses bzw. während der amorphen BCC-Bildung abgeführt.

Das Ende der BCC-Bildungsperiode zeichnet sich durch ein abruptes Sinken der Leitfähigkeit aus, die größer als 0,5 mS/cm/min ist. In diesem Moment wird die Carbonatisation gemäß der Erfindung abgebrochen und das erhaltene, basische Calciumcarbonat mittels oberflächenaktiver Additive, nämlich organisch substituierte Phosphonate, Polycarboxylate, oder doppel-hydrophile Blockcopolymere, stabilisiert. Diese werden mit einem Anteil von etwa 0,5 bis 5 Gew.-%, insbesondere etwa 1-2 Gew.-%, bezogen auf den $CaCO_3$-Gehalt der Calciumhydroxid-Suspension, zugegeben. In frage kommen z.B. Aminotri-(methylenphosphonsäure), 1-Hydroxyethylen-(1,1-diphosphonsäure), Ethylendiamin-tetra-(methylenphosphonsäure), Hexamethylendiamin-tetra-(methylenphosphonsäure), Diethylentriamin-penta-(methylenphosphonsäure), etc., sowie deren lösliche Salze. Diese Verbindungen sind als multifunktionelle Sequestriermittel für Metallionen und Steininhibitoren bekannt. Anstelle eines organischen Phosphonates können auch verschiedene niedermolekulare Homopolymere der Acrylsäure (Molekulargewicht von 1000 - 10000) bzw. deren entsprechenden Salzformen, genauso wie andere Verbindungen ähnlicher Wirkung, eingesetzt werden.

Die Anwesenheit von organisch substituierten Phosphonaten spielt eine sehr wichtige Rolle in dem Recarbonatisationsprozeß. In der Anwesenheit von Polyphosphonaten erweist sich basisches Calciumcarbonat in der Suspension während des Recarbonatisationsprozesses (ausnahmsweise) sehr widerstandsfähig gegen die Deformierung der Kristalle. Das wurde der festen Fixierung der Kristalle durch Adsorption der großen Phosphonat-Moleküle zugeschrieben. So können solche Kristalle während des Einbaus von $CO_3$-Gruppen in das Kristallgitter, ohne eine Änderung des Kristallhabitus, in die calcitische Form übergehen. Eine Fällung im Bereich unter 1 Gew.-% Polyphosphonat, bezogen auf das $CaCO_3$-Produkt, führt zu einer bimodalen Partikelgrößenverteilung, gekennzeichnet durch große ungleichmäßige Agglomerate und verlängerte Partikel, die während der Fällung entstehen. Wenn keine Additive in der Suspension vorhanden sind, entstehen die Partikel mit prismatischer Kristallform.

Eingehende Untersuchungen des Verfahrensablaufs haben ergeben, daß es mit der Variation der Fällbedingungen, wie z.B. Gas-Durchflußmenge oder insbesondere System-Hydrodynamik, möglich ist, die Produkte mit verschiedenen mittleren Partikelgrößen (mittlerer Partikeldurchmesser von ca. 0,5 - 1,5 μm) herzustellen. Es wurde beobachtet, daß bei höherer Antriebsleistung ein Produkt mit feineren Korngrößen gewonnen wird. Das kennzeichnet einen starken Einfluß des Leistungseintrages auf den Gasabsorptionsprozeß, bei dem es besonders wichtig ist, zwischen dem dispergierten Gas und der Flüssigkeit einen möglichst hohen Stoffübergang zu erreichen. Die eingebrachte Energie bewirkt in Form von laminaren und turbulenten Scherkräften die erwünschte Zerteilung von Gasblasen. So werden die Durchmesser der erzeugten Gasblasen, d. h. die spezifische Phasengrenzfläche, sowie der turbulente Flüssigfilmkoeffizient, beeinflußt. Großblasen steigen durch die Kalkmilch ohne wesentlichen Beitrag zum Stoffübergang zu leisten, rasch zur Flüssigkeitsoberfläche; Kleinblasen mit großer Verweilzeit verarmen an zu reagierendem Gas, so daß die Fraktion an mittelgroßen Blasen den Stoffübergang wesentlich verbessern. Mit zunehmendem Leistungseintrag nimmt der Blasendurchmesser ab, womit die Absorptionsrate immer deutlicher von dem Stoffübergangsphänomen bestimmt wird. Das kann zu hohen lokalen Übersättigungen bzw. zu hoher Keimbildungsrate, d.h. zu den Produkten mit feineren Korngrößen, führen. Erfindungsgemäß wird bei einem Leistungseintrag von 25kW/m$^3$ ein Produkt mit Korngröße um 0,7 μm gewonnen.

Weiterhin haben die eingehenden Untersuchungen des Verfahrensablaufs ergeben, daß durch die kontrollierte, langsame Recarbonatisation der oben genannten Suspension, bzw. beim Zerfallen des basischen Calciumcarbonats, die plättchenformige Kristallform erhalten bleibt. Dabei ist es notwendig, daß am Anfang der Begasung der pH-Wert nicht mehr als 0,04 pH-Einheiten/min abfällt. Wenn der pH-Wert beim Begasen mehr als 0,04 pH-Einheiten/min abfällt, wird kein plättchenförmiges, calcitisches Calciumcarbonat erzeugt. Zur Einhaltung des pH-Werts gibt es verschiedene Methoden. Zum Beispiel die Zuführung des $CO_2$ mit einem Gasdurchfluß von 0,01 - 0,5 dm$^3$/h/g CaO, wünschenswert von 0,01 bis 0,1 dm$^3$/h/g CaO mit Variation der Drehzahl des Rührers. Diese Variablen sind nicht kritisch und können empirisch eingestellt werden.

Gemäß der Erfindung kann die zweite Phase des Verfahrens (Recarbonatisation der stabilisierten BCC-Suspension) anschließend oder zu einem anderen Zeitpunkt durchgeführt werden. Die Carbonatisation von BCC wird solange durchgeführt, bis das Umsetzungsgemisch quantitativ zu plättchenförmigem Calcit carbonatisiert ist. Es ist empfehlenswert, diesen Prozeß im pH-Bereich von 7 bis 8 zu beenden.

Die Erfindung sieht auch vor, daß ein vergleichbares Produkt durch Trocknen des stabilisierten BCC unter kontrollierten Bedingungen (erhöhte Luftfeuchtigkeit in einer $CO_2$-Atmosphäre) hergestellt werden kann.

Das erfindungsgemäß gewonnene plättchenförmige Calciumcarbonat kann aufgrund seiner Beschaffenheit ohne zeitliche Einschränkungen, insbesondere bei der Papierherstellung, in der Kunststoffindustrie, im Papierstrich, für Dispersionsfarben etc., verwendet werden. Aufgrund der höheren Weiße und des besseren Glanzes, der guten Glätte und Kapillarität der erzeugten Oberfläche, ist der Einsatz des Produkts z.B. im Ink-Jet-Papierbereich von besonderem Vorteil.

Alle Calciumcarbonate, erwähnt und beschrieben in den nachfolgenden Beispielen, wurden aus Kalk von Schaefer Kalk (Werk Hahnstätten, DE) gefällt. Alle Fällungen wurden im 10, 100 oder 200 dm$^3$ Maßstab durchgeführt.

Der granulometrische Faktor ist ein Parameter, der die Ermittlung der Partikelgrößenverteilung eines Kollektivs von Partikeln ermöglicht. Ein niedriger granulometrischer Faktor besagt, daß das Kollektiv von Partikeln aus bedeutenden Mengen der Partikeln, deren Durchmesser dem mittleren Partikeldurchmesser entspricht, besteht.

Um den granulometrischen Faktor eines Kollektivs von Teilchen zu errechnen, wird zunächst eine Partikelgrößenverteilungsbestimmung z.B. mittels einer Sedimentationsanalyse vorgenommen und graphisch dargestellt, wobei auf der Abszissenachse der Äquivalentdurchmesser, auf der Ordinatenachse der Anteil an Partikeln in Massen-% aufgetragen wird. Die Feinheitsmerkmale $d_{80\%}$ und $d_{20\%}$ wurden an den erhaltenen Durchgangsverteilungssummen-Kurven abgelesen und der granulometrische Faktor mittels folgender Formel errechnet:

$$F = 2X \frac{d_{80\%} - d_{20\%}}{d_{80\%} + d_{20\%}}$$

wobei

$d_{80\%}$ = Partikeldurchmesser in μm bei 80 Massen-%,
$d_{20\%}$ = Partikeldurchmesser in μm bei 20 Massen-%.

Die Erfindung wird im folgenden anhand dreier Beispiele sowie zugehöriger Figuren näher erläutert. Es zeigen:

Fig. 1    eine rasterelektronenmikroskopische Aufnahme (REM-Aufnahme) des plättchenförmigen Produkts, hergestellt nach Beispiel 1;

Fig. 2    die Partikelgrößenverteilung des plättchenförmigen Produkts nach Beispiel 1;

Fig. 3    eine Röntgenbeugungsaufnahme des plättchenförmigen Produkts nach Beispiel 1;

Fig. 4    eine REM-Aufnahme des plättchenförmigen Produkts nach Beispiel 2 und

Fig. 5    die Partikelgrößenverteilung des plättchenförmigen Produkts nach Beispiel 2.

Beispiel 1:

In eine Kalkhydrat-Suspension mit einer Konzentration von 68 g $CaO/dm^3$ wird bei einer Ausgangstemperatur von 15°C ein $CO_2$-Luftgemisch mit 20 % $CO_2$ eingeleitet, wobei der Suspension 0,3 % Natriumpolyphosphat, bezogen auf $CaCO_3$, zugesetzt wird. Der Gasdurchfluß beträgt 0,35 $dm^3$ $CO_2$/h/g CaO und der spezifische Leistungseintrag über ein Rührgerät beträgt 25 $kW/m^3$. Die Reaktionswärme wird während der amorphen BCC-Bildung (Anfang des Prozesses) abgeführt. Die Reaktion zu dem plättchenförmigen, basischen Calciumcarbonat ist abgeschlossen, wenn die Leitfähigkeit der Suspension mehr als 0,5 mS/cm/min abfällt. Zu dem Zeitpunkt werden der Suspension 1,3 Gew.-% Ethylendiamin-tetra-(methylenphosphonsäure), bezogen auf das $CaCO_3$, zugesetzt und gerührt. Die so entstehende Suspension wird durch geänderte

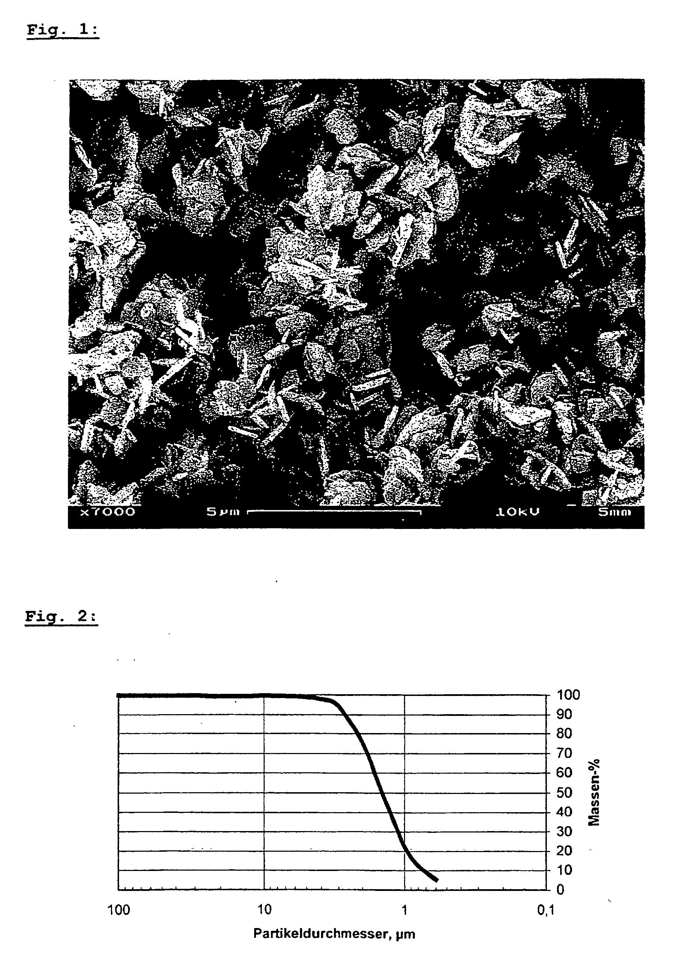

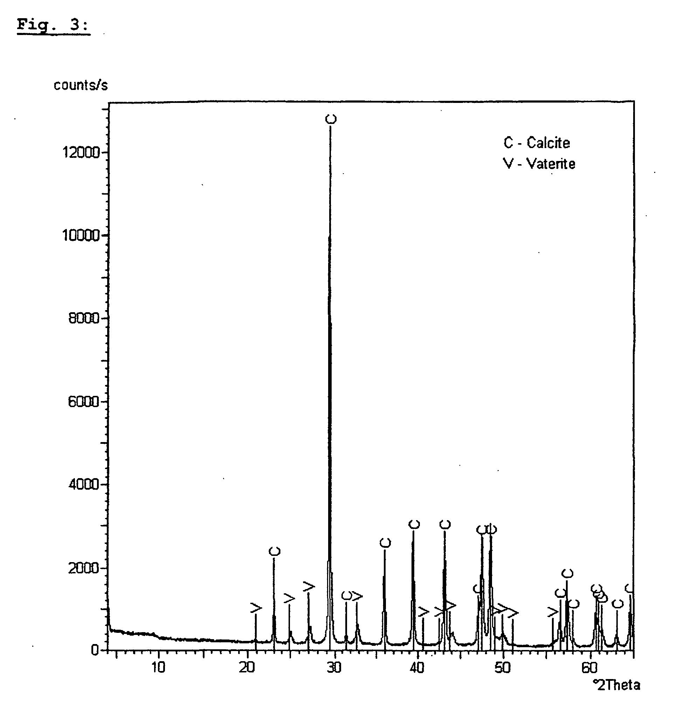

Gasungsbedingungen recarbonatisiert, wobei die Gasung nun so geführt wird, daß am Anfang der Begasung der pH-Wert nicht mehr als 0,04 pH-Einheiten/min abfällt. 0,06 $dm^3$ CO2/h/gCaO werden unter leichtem Rühren eingeleitet. Die Reaktion zu dem plättchenförmigen Calcit ist abgeschlossen, wenn das Umsetzungsgemisch quantitativ zu plättchenförmigem Calcit carbonatisiert wird, wobei der pH-Wert zwischen 7 bis 8 liegt. Das plättchenförmige Material wird filtriert, bei 105°C getrocknet und gemahlen. Das Produkt besteht aus locker agglomerierten plättchenförmigen Partikeln mit einem Durchmesser von 1,2 µm und einer Dicke des Korns von 0,1 µm. Es hat überwiegend calcitische Kristallstruktur mit nur geringen Spuren an Vaterit, bestimmt mit einem Diffractometer CubiX XRD der Firma Philips, NL und eine spezifische Oberfläche von 13 $m^2$/g, bestimmt mit der BET-Methode mit einem Gerät Gemini der Fa. Micromeritics. Fig. 1 zeigt die REM-Aufnahme (Zeiss, DSM 962, DE), Fig. 2 die Partikelgrößenverteilung (Sedigraph 5100) und Fig. 3 ein Diffraktogramm des Produkts. Der granulometrische Faktor, bestimmt nach vorstehender Formel unter Benutzung von der Fig. 2 entnommenen Werten, beträgt 0,76.

Beispiel 2:

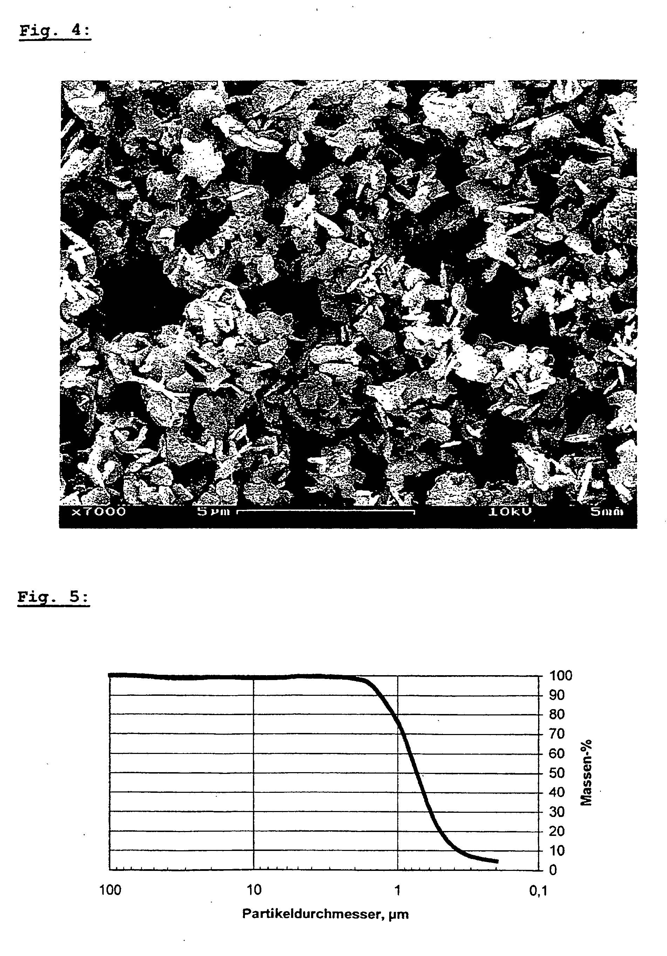

Hierbei wird in eine Kalkhydrat-Suspension mit einer Konzentration von 68g $CaO/dm^3$ ein $CO_2$-Luftgemisch mit 20% $CO_2$, wie in Beispiel 1 beschrieben, eingeleitet, wobei der Gasdurchfluß 0,24 $dm^3$ $CO_2$/h/g CaO und der spezifische Leistungseintrag 200 $kW/m^3$ beträgt. Die Recarbonatisation wird mit 0,02 $dm^3$ $CO_2$/h/g CaO, wie im Beispiel 1 beschrieben, durchgeführt. Im übrigen wird wie im Beispiel 1 verfahren. Das Produkt besteht aus Partikeln mit calcitischer Kristallstruktur von einem Durchmesser von 0,6 µm und einer Dicke von 0,1 µm. Die spezifische Oberfläche beträgt 20 $m^2$/g. Fig. 4 gibt die REM-Aufnahme und Fig. 5 die Partikelgrößenverteilung des Produkts wieder. Der granulometrische Faktor beträgt 0,71.

Beispiel 3:

Ein Calciumcarbonat-Pulver mit Calcitstruktur und plättchenförmigem Habitus wird, wie in dem Beispiel 1 beschrieben, hergestellt. Nach der Zugabe von 1,3 Gew.-% Ethylendiamin-tetra-(methylenphosphonsäure), bezogen auf $CaCO_3$, wird das basische Calciumcarbonat anschließend filtriert und bei 150° in $H_2O$ gesättigter $CO_2$-Atmosphäre getrocknet. Das anfallende Endprodukt ist mit dem im Beispiel 1 beschriebenen Produkt vergleichbar. Dies gilt auch bezüglich der Darstellung in den Fig. 1 bis 3.

**Patentansprüche**

1. Verfahren zum Herstellen von stabilem plättchenförmigem calcitischem Calciumcarbonat mit einem granulometrischen Faktor von etwa 0,5 bis 1 und einem mittleren Partikeldurchmesser von etwa 0,5 bis 1,5 µm, mit folgenden Schritten:

   - Calciumhydroxid in wässriger Suspension wird unter
   - Einleiten von $CO_2$ und
   - einem Energieeintrag von etwa 25 bis 200 kW/$m^3$ zu basischem Calciumcarbonat umgesetzt,
   - in der Suspension werden als oberflächenaktive Stoffe ein oder mehrere Additive der Gruppe bestehend aus organisch substituierten Phosphonaten, Polycarboxylaten oder doppel-hydrophilen Blockcopolymeren mit etwa 0,5 bis 5 Gew.-% bezogen auf das Calciumcarbonat unter Rühren verteilt,
   - zusätzlich zur Zugabe der oberflächenaktiven Stoffe wird weiteres $CO_2$ in die Suspension eingeleitet, wobei am Anfang der $CO_2$-Begasung der pH-Wert der Suspension mit einem Wert von ≤ 0,04 pH-Einheiten/min abgesenkt wird, und
   - das so gebildete calcitische Calciumcarbonat wird abfiltriert.

2. Verfahren nach Anspruch 1,
   **dadurch gekennzeichnet, daß** die Umsetzung des Calciumhydroxids zu basischem Calciumcarbonat bei einer Temperatur ≤ 15°C durchgeführt wird.

3. Verfahren nach Anspruch 1,
   **dadurch gekennzeichnet, daß** die Umsetzung des Calciumhydroxids zu basischem Calciumcarbonat bei einer Temperatur von etwa 15 - 20°C unter Zusatz von Calcium-Komplexbildung, nämlich Polyphosphaten, Phosphonaten, Hydroxycarbonsäuren, Saccharose oder Glutamate, mit etwa 0,01 bis 1 Gew.-% bezogen auf CaO-Gehalt der Calciumhydroxid-Suspension durchgeführt wird.

4. Stabiles plättchenförmiges calcitisches Calciumcarbonat mit einem granulometrischen Faktor von etwa 0,5 bis 1 und einem mittleren Partikeldurchmesser von etwa 0,5 bis 1,5 μm.

5. Verfahren zum Herstellen von stabilem plättchenförmigem calcitartigem Calciumcarbonat mit einem granulometrischen Faktor von etwa 0,5 bis 1 und einem mittleren Partikeldurchmesser von etwa 0,5 bis 1,5 μm, mit folgenden Schritten:

- Calciumhydroxid in wässriger Suspension wird unter
- Einleiten von $CO_2$ und
- einem Energieeintrag von etwa 25 bis 200 kW/m$^3$ der Suspension zu basischem Calciumcarbonat umgesetzt,
- in der Suspension werden als oberflächenaktive Stoffe ein oder mehrere Additive der Gruppe bestehend aus organisch substituierten Phosphonaten, Polycarboxylaten oder doppel-hydrophilen Blockcopolymeren, mit etwa 0,5 bis 5 Gew.-% bezogen auf das Calciumcarbonat unter Rühren verteilt,
- das gebildete basische Calciumcarbonat wird abfiltriert und bei etwa 150°C gesättigter $CO_2$-Atmosphäre getrocknet.

6. Stabiles, plättchenförmiges, calcitartiges Calciumcarbonat mit einem granulometrischen Faktor von etwa 0,5 bis 1 und einem mittleren Partikeldurchmesser von etwa 0,5 bis 1 μm.

7. Verwendung des Calciumcarbonats gemäß den Ansprüchen 4 und 6 als Füllstoff oder Pigment in Kunststoffen, Papier, Farben, insbesondere Dispersionsfarben, und Kosmetika.

8. Verwendung des Calciumcarbonats gemäß den Ansprüchen 4 und 6 zur Beschichtung von ink-jet-Papieren.

**Claims**

1. Process for the preparation of stable platelet-shaped calcitic calcium carbonate with a granulometric factor of approximately 0.5 to 1 and an average particle diameter of approximately 0.5 to 1.5 μm, with the following stages:

- calcium hydroxide in aqueous suspension is converted with
- feeding of $CO_2$ and

- the injection of energy of approximately 25 to 200 kW/m$^3$ to basic calcium carbonate,
- one or more additives of the group consisting of organically substituted phosphonates, polycarboxylates or double-hydrophilic block copolymers with approx. 0.5 to 5 % by weight, related to the calcium carbonate are distributed in the suspension, with agitation, as surface-active substances,
- besides the addition of the surface-active substances, further $CO_2$ is fed into the suspension, the pH value of the suspension being reduced by a value of $\leq 0.04$ pH units/min. on commencement of the $CO_2$ gasification, and
- the calcitic calcium carbonate thus formed is filtered off.

2. Process according to claim 1, **characterised in that** the conversion of the calcium hydroxide to basic calcium carbonate is carried out at a temperature of $\leq 15°C$.

3. Process according to claim 1, **characterised in that** the conversion of the calcium hydroxide to basic calcium carbonate is carried out at a temperature of approx. 15 - 20°C, with the addition of calcium complex formation, namely polyphosphates, phosphonates, hydroxycarbonic acids, saccharoses or glutamates, with approx. 0.01 to 1% by weight related to the CaO content of the calcium hydroxide suspension.

4. Stable platelet-shaped calcitic calcium carbonate with a granulometric factor of approx. 0.5 to 1 and an average particle diameter of approx. 0.5 to 1.5 μm.

5. Process for the preparation of stable platelet shaped calcite-type calcium carbonate with a granulometric factor of approx. 0.5 to 1 and an average particle diameter of approx. 0.5 to 1.5 μm, with the following stages:

- calcium hydroxide in aqueous suspension is converted with
- feeding of $CO_2$ and
- the injection of energy of approximately 25 to 200 kW/m$^3$ to basic calcium carbonate,
- one or more additives of the group consisting of organically substituted phosphonates, polycarboxylates or double-hydrophilic block copolymers with approx. 0.5 to 5% by weight, related to the calcium carbonate are distributed in the suspension, with agitation, as surface-active substances,
- the basic calcium carbonate formed is filtered off and dried in a $CO_2$ atmosphere saturated at approx. 150°C.

**6.** Stable platelet-shaped, calcite-type calcium carbonate with a granulometric factor of approx. 0.5 to 1 and an average particle diameter of approx. 0.5 to 1 $\mu$m.

**7.** Use of the calcium carbonate according to claims 4 and 6 as a filler or pigment in plastics, paper, dyes, particularly dispersion dyes, and cosmetics.

**8.** Use of the calcium carbonate according to claims 4 and 6 for coating of inkjet papers.

**Revendications**

**1.** Procédé pour la préparation de carbonate de calcium calcitique stable en forme de pastilles possédant un facteur granulométrique d'environ 0,5 à 1 et un diamètre moyen de particules d'environ 0,5 à 1,5 $\mu$m, comprenant les étapes ci-après consistant à :

- transformer de l'hydroxyde de calcium en suspension aqueuse
- en introduisant du dioxyde de carbone et
- avec une entrée d'énergie d'environ 25 à 200 kW/m$^3$ en carbonate de calcium basique,
- répartir, dans la suspension, tout en agitant, à titre de substances tensioactives, un ou plusieurs additifs choisis parmi le groupe constitué par des phosphonates à substitution organique, par des polycarboxylates ou encore par des copolymères séquencés doublement hydrophiles à concurrence de 0,5 à 5 % en poids rapportés au carbonate de calcium,
- en plus de l'addition des substances tensioactives, introduire une quantité supplémentaire de dioxyde de carbone dans la suspension, la valeur de pH de la suspension étant soumise à un abaissement à concurrence d'une valeur de ≤ 0,04 unité de pH/minute, au début de la purge avec le dioxyde de carbone, et
- séparer par filtration le carbonate de calcium calcitique ainsi obtenu.

**2.** Procédé selon la revendication 1, **caractérisé en ce qu'**on effectue la transformation de l'hydroxyde de calcium en carbonate de calcium basique à une température ≤ 15 °C.

**3.** Procédé selon la revendication 1, **caractérisé en ce qu'**on effectue la transformation de l'hydroxyde de calcium en carbonate de calcium basique à une température d'environ 15 à 20 °C, en ajoutant des formateurs de complexes de calcium, plus précisément des polyphosphates, des phosphonates, des acides hydroxycarboxyliques, du saccharose ou des glutamates, à concurrence d'environ 0,01 à 1 % en poids rapportés à la teneur de la suspension de l'hydroxyde de calcium eh CaO..

**4.** Carbonate de calcium calcitique stable en forme de pastilles possédant un facteur granulométrique d'environ 0,5 à 1 et un diamètre moyen de particules d'environ 0,5 à 1,5 $\mu$m.

**5.** Procédé pour la préparation de carbonate de calcium calcitique stable en forme de pastilles possédant un facteur granulométrique d'environ 0,5 à 1 et un diamètre moyen de particules d'environ 0,5 à 1,5 $\mu$m, comprenant les étapes ci-après consistant à :

- transformer de l'hydroxyde de calcium en suspension aqueuse
- en introduisant du dioxyde de carbone et
- avec une entrée d'énergie d'environ 25 à 200 kW/m$^3$ en carbonate de calcium basique,
- répartir, dans la suspension, tout en agitant, à titre de substances tensioactives, un ou plusieurs additifs choisis parmi le groupe constitué par des phosphonates à substitution organique, par des polycarboxylates ou encore par des copolymères séquencés doublement hydrophiles à concurrence de 0,5 à 5 % en poids rapportés au carbonate de calcium,
- séparer par filtration le carbonate de calcium obtenu et le sécher à une température d'environ 150 °C sous une atmosphère saturée de dioxyde de carbone.

**6.** Carbonate de calcium calcitique stable en forme de pastilles possédant un facteur granulométrique d'environ 0,5 à 1 et un diamètre moyen de particules d'environ 0,5 à 1 $\mu$m.

**7.** Utilisation du carbonate de calcium selon les revendications 4 à 6 à titre de matière de charge ou de pigment dans des substances synthétiques, dans du papier, dans des peintures, en particulier dans des peintures au latex, et dans des produits cosmétiques.

**8.** Utilisation du carbonate de calcium selon les revendications 4 à 6 pour le couchage de papiers destinés à l'impression par jet d'encre.

**Fig. 1:**

**Fig. 2:**

Fig. 3:

Fig. 4:

Fig. 5: